# EUROPÄISCHE PATENTSCHRIFT

(11) **EP 0 696 420 B1**
(45) Veröffentlichungstag und Bekanntmachung des Hinweises auf die Patenterteilung: **04.06.1997**
(21) Anmeldenummer: 95890150.6
(22) Anmeldetag: 10.08.1995
(51) Int. Cl.: A01K 5/02

(54) **Verfahren zur dosierten Abgabe von Flüssigkeiten an mehrere Abgabestellen**
Method for the dosed delivery of fluids to a plurality of delivery points
Procédé pour le dosage et la distribution d'un liquide dans des récipients différents

(30) Priorität: 10.08.1994 AT 1558/94
(43) Veröffentlichungstag der Anmeldung: 14.02.1996
(73) Patentinhaber: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Heiner, Dipl.-Ing.

(56) Entgegenhaltungen:
- EP-A- 0 163 080
- EP-A- 0 595 784
- DE-A- 4 206 728
- DE-C- 4 236 375

## Beschreibung

Die Erfindung betrifft ein Verfahren gemäß dem Oberbegriff des Patentanspruches 1.

Ein derartiges Verfahren ist aus der eigenen EP-A 0 595 784 bekannt. Bei diesem bekannten Verfahren kann zunächst unter Verwendung der Förderpumpe dosiert an den einzelnen Abgabestellen ausgeteilt werden. Nach der ersten Entleerung des Mischbehälters wird der gesamte Futterrest aus der Leitung mittels z. B. von einem Luftkompressor erzeugter Druckluft in den Mischbehälter zurückgefördert und vorzugsweise gewogen, wonach mittels der Förderpumpe den noch zu beteilenden Ausläßen zugeordnete Futterportionen in die Förderleitung gedrückt und dann mittels Druckluft einzeln zu den zugeordneten Auslässen befördert werden. Die Bestimmung, welcher Auslaß als nächster zu beteilen ist, kann durch Absperrschieber in der Ringleitung oder dadurch bewerkstelligt werden, daß auch vom anderen Leitungsende her Druckluft eingeblasen wird, so daß der sich hinter dem zu beteilenden Auslaß aufbauende Luftpolster ein Weiterströmen des Futters über diesen Auslauf hinaus verhindert. Nach Beendigung der Futterausteilung kann die gesamte Leitung einschließlich der Pumpe und den Verteilerventilen an den Futterstellen durch Durchblasen mit Druckluft, in die gegebenenfalls Wasser und Reinigungs- bzw. Desinfektionsmittel eingesprüht werden, gereinigt und sogar getrocknet werden, so daß bei jeder neuen Fütterung eine Kontaminierung des abgegebenen Futters durch in der Leitung verbliebene Futterreste verhindert wird.

Bei der Rückführung des Futterrestes in den Mischbehälter kann dieser Futterrest durch Ausbildung des Mischbehälters als Wiegebehälter gewogen werden, so daß Dosierfehler, die an den vorher beschickten Auslässen bzw. Leitungszweigen aufgetreten sind, erfaßt und für die nächste Fütterung korrigiert werden können. Die mit Druckluft zu verteilenden Einzelportionen können ebenfalls durch Abwiegen genau bestimmt werden.

Nachteilig bei dem bekannten Verfahren ist, daß bei Verwendung von Druckluft als Transportmedium verschiedene Sonderkonstruktionen notwendig sind, die eine Nachrüstung bestehender Anlagen zur Ausübung dieses Verteilverfahrens erschweren oder unmöglich machen. Insbesondere müssen die unter Verwendung von Druckluft zu beteilenden Auslässe zur Verhinderung eines Verspritzens des Futters mit Luftabscheidern ausgestattet oder als Mehrfachauslässe ausgebildet werden. Die vollständige Entleerung der Leitung vom Futterrest und die einzelne Zufuhr der mit Druckluft zu verteilenden Futterportionen ist zeitaufwendig, so daß sich insgesamt gesehen lange Fütterungszeiten insbesondere für die Verteilung des Futterrestes ergeben. Anderseits ist das bekannte Verfahren derzeit das einzige Verfahren, bei dem eine restlose Verteilung des Futters unter genauer Überwachung der jeweiligen Abgabemengen und den erwähnten Korrekturmöglichkeiten durchgeführten werden kann und auch eine Kontaminierung des Futters durch Futterreste in der Leitung sicher verhindert wird.

Andere bekannte Verfahren die die erwähnten Bedingungen nicht oder nur zum Teil erfüllen, sind z. B. aus der EP-A 0 163 080 bekannt. Bei diesem Verfahren ist die Ringleitung zwischen den Fütterungsvorgängen mit Wasser gefüllt und es ist ein Zwischenbehälter für Brauchwasser vorgesehen. Bei einem Fütterungsvorgang wird die gewünschte Futtermenge im Mischbehälter vorbereitet und dann mittels der Förderpumpe in die Ringleitung gedrückt und ausgeteilt, wobei das eingepreßte Futter die im Rohr befindliche Wassersäule in einen Zwischentank verdrängt. Sobald der Mischbehälter leer ist, wird Wasser aus dem Zwischentank in den Mischbehälter eingeleitet, mittels der Förderpumpe in die Ringleitung gedrückt und dadurch das Futter zu den noch zu beteilenden Abgabestellen befördert. Während bei einem Verfahren der eingangs geschilderten Art vor allem bei größeren Futtermengen periodisch auch während eines Fütterungsvorganges eine Homogenisierung des Futters durch Umpumpen mittels der Förderpumpe durch die Ringleitung vorgenommen werden kann, ist dies bei dem beschriebenen Verfahren nicht möglich. Es ist auch nur eine grobe Überwachung der Dosierung bzw. Dosiergenauigkeit möglich und es besteht die Gefahr, daß sich eine Kontaminierung durch das mit Futter versetzte in der Rohrleitung befindliche Brauchwasser ergibt. Im Zwischentank setzen sich Futterreste ab, so daß auch hier eine Fäulnisbildung mit entsprechender Gefährdung des abgegebenen Futters möglich ist. Wenn eine Fütterungsanlage zwei oder mehrere nacheinander beschickbare Ringleitungen aufweist, wird Brauchwasser in einer dem gesamten Füllvolumen dieser Ringleitungen entsprechenden Menge und ein diese Menge fassender Zwischentank benötigt.

Aus der EP-A 0 296 260 ist es bekannt, eine zu starke Durchmischung des Flüssigfutters mit dem in den Leitungen befindlichen Brauchwasser dadurch zu verhindern, daß in den Leitungen verschiebbare Pfropfen angeordnet werden, die die Futtersäulen von den Wassersäulen trennen. Das Absetzproblem im Zwischenbehälter und die Füllung der Rohrleitungen mit gegebenenfalls kontaminiertem Brauchwasser zwischen den Fütterungsperioden ist auch hier vorhanden. Wegen des hohen technischen Aufwandes und des Verschleißes der Pfropfen treten häufig Störungen auf.

Ein ähnliches Verfahren ist aus der DE-A 42 06 728 bekannt, doch wird hier zur Bekämpfung der Absetztendenz des Futters in der Leitung wechselweise von beiden Enden der Ringleitung her zu- und abgeleitet, wobei jeweils das Wasser durch das Futter in einen Zwischentank verdrängt wird. Es ergibt sich die Möglichkeit, die bei der einen Art der Beschickung am Ende der Ringleitung befindlichen Abgabestellen unter Umkehr der Beschickungsrichtung auf kurzem Wege zu bedienen. Futterreste in der Leitung können durch Zufuhr von Frischwasser in den Vor- oder Rücklaufbereich ausgeteilt werden. Das im Zwischenbehälter befindliche Brauchwasser kann zur Futteraufbereitung Verwendung finden. Auch hier bleiben die Leitungen zwischen den Fütterungsperioden mit kontaminiertem Brauchwasser gefüllt, und es wird ein Brauchwassertank und ein eigener Frischwassertank benötigt.

Aufgabe der Erfindung ist es, ein Verfahren der eingangs genannten Art unter Beibehaltung der grundsätzlichen Vorteile der möglichen hohen Dosiergenauigkeit, der Gewährleistung sauberer Leitungen zwischen den Fütterungsperioden und der möglichen restlosen Verteilung des für einen Fütterungsvorgang vorbereiteten Futters so zu verbessern, daß der Anlagenaufwand verringert, die Verteilung des Restfutters beschleunigt und die Möglichkeit erzielt wird, bestehende Flüssigfütterungsanlagen mit relativ einfachen Mitteln zur Durchführung des erfindungsgemäßen Verfahrens umzurüsten.

Die gestellte Aufgabe wird durch die Verfahrensschritte des Patentanspruches 1 gelöst.

Wegen der Verwendung von Flüssigkeit als Transportmedium können an den Abgabestellen die üblichen Abgabeventile verbleiben. Die Flüssigkeit kommt nur mit den Enden der aus dem Futterrest gebildeten Futtersäule in der Rohrleitung in Berührung, und die Hauptmenge des Futters wird vorher in die gesäuberte, leere Leitung abgegeben. Trotzdem können Dosierfehler erfaßt und korrigiert werden. Eine bestehende Anlage braucht nur um den Drucklufterzeuger, eine Pumpe, wenn kein ausreichender Druck aus der Flüssigkeits-, insbesondere Wasserleitung, zur Verfügung steht, sowie einige Ventile ergänzt zu werden. Eine Homogenisierung des Futters während eines Austeilvorganges durch das beschriebene Umpumpen ist möglich.

Die entscheidenden Vorteile des erfindungsgemäßen Verfahrens kommen in einer Weiterbildung gemäß Anspruch 2 besonders zum Tragen.

Hier geht man davon aus, daß beim Zurückblasen des Futterrestes aus den zuerst beschickten Ringleitungen keine Schwierigkeiten auftreten, da das Futter ja in den Mischbehälter zurückgefördert wird. Es ist möglich, Dosierungenauigkeiten für jeden einzelnen Ring zu erfassen und zu korrigieren. Die benötigte Wassermenge entspricht nur dem Füllvolumen der letzten Ringleitung die man aus diesem Grund zweckmäßig kurz bzw. klein auslegen wird. Eine Reinigung der Gesamtanlage durch Durchblasen mit Druckluft, in die nach Beendigung eines Fütterungsvorganges Reinigungs- oder Desinfektionsmittel eingesprüht werden können, ist wieder gewährleistet. Es wird auch möglich, den Mischbehälter über entsprechende Sprüh- und Spritzdüsen zu reinigen.

Besonders vorteilhaft ist eine Weiterbildung gemäß Anspruch 3. Falls das Restfutter nicht am letzten Auslaß sondern an anderen Auslässen abgegeben werden soll, wird das Restfutter bis zum letzten dieser Auslässe zurückgedrückt. Das Füllvolumen der Ringleitung ist bekannt bzw. kann mittels eines Wiegebehälters leicht ermittelt werden. Die abgegebenen Istmengen an Futter können daher laufend überwacht werden, so daß auch Korrekturen in der Dosierung fortlaufend möglich sind. Schließlich bewirkt eine Weiterbildung gemäß Anspruch 4 eine Anreicherung des Futterrestes, so daß dieser von den Tieren lieber angenommen wird. Da die Flüssigkeit ohnehin bei der nächsten Futterzubereitung Verwendung findet, stellt ihr vorhergehender Einsatz keine Verschwendung dar.

Weitere Einzelheiten und Vorteile des Erfindungsgegenstandes entnimmt man der nachfolgenden Zeichnungsbeschreibung.

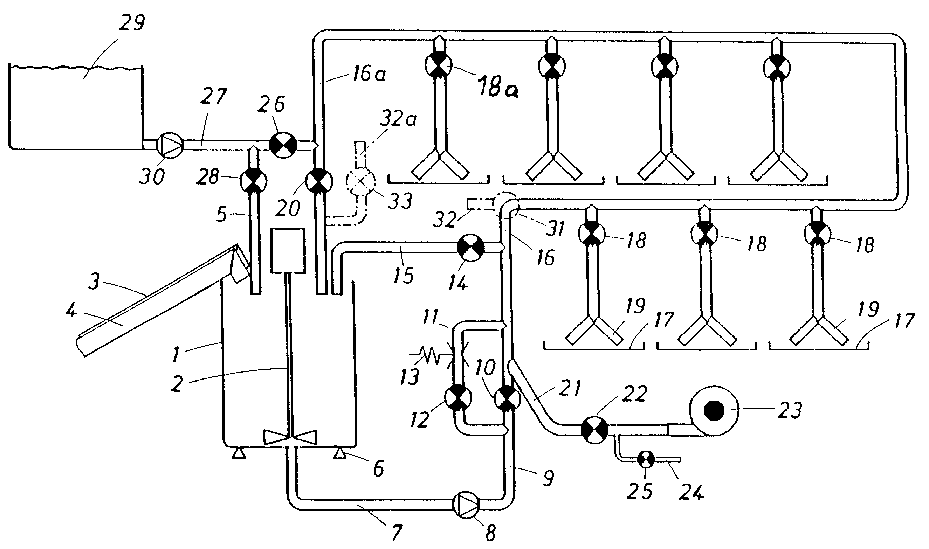

In der Zeichnung ist als Ausführungsbeispiel eine zur Durchführung des erfindungsgemäßen Verfahrens geeignete Fütterungsanlage im Schema dargestellt.

Die dargestellte Fütterungsanlage besitzt einen als Wiegebehälter ausgebildeten Mischbehälter 1 mit Rührwerk 2, dem über Leitungen 3, 4 Futterbestandteile und über eine Leitung 5 Wasser zugeführt werden können. Unter Verwendung der Wiegeeinrichtung 6 wird vor einer Fütterung die benötigte Gesamtfuttermenge im Mischbehälter 1 zubereitet. An den Mischbehälter 1 schließt über einen Rohrstutzen 7 eine Förderpumpe 8 an, die in eine Leitung 9 fördert. In dieser Leitung ist ein Ventil 10 vorgesehen. Eine Nebenleitung 11 mit Ventil 12 und Drosselstelle 13 überbrückt das Ventil 10, so daß bei geschlossenem Ventil 10 und geöffnetem Ventil 12 der Behälterinhalt über die Drosselstelle 13 gepumpt werden kann, wodurch die Strömungsgeschwindigkeit zur Erzielung einer genaueren Dosierung an den Abgabestellen verringert wird. Nach dem Ventil 14 geht die Hauptleitung 9 in eine Ringleitung 16 über, an die mehrere Abgabestellen 17 über Dosierventile 18 und Verteiler 19 angeschlossen sind.

Das nach dem letzten Dosierventil 18a vorhandene Ende 16a der Ringleitung ist durch ein Ventil 20 absperrbar und bei geöffnetem Ventil 20 mit dem Mischbehälter 1 verbunden. Bei geöffnetem Ventil 20 und geschlossenen Ventilen 18, 18a kann das Futter durch Umpumpen über die Ringleitung 16 homogenisiert werden. Soweit dies bisher beschrieben wurde ist die Fütterungsanlage allgemein bekannt. Zur Durchführung des erfindungsgemäßen Verfahrens mündet nach dem Ventil 10 in die Leitung 9 eine Luftleitung 21 mit Ventil 22, die von einem Turbokompressor 23 beschickt wird, wobei vor dem Ventil 22 in die Leitung 21 über eine Nebenleitung 24 und ein Ventil 25 Wasser oder ein Reinigungs- oder Desinfektionsmittel eingesprüht werden kann. Ferner schließt an die Leitung 16a über ein Ventil 26 eine Wasserleitung 27 an, die über ein weiteres Ventil 28 mit der Leitung 5 verbunden ist und, falls der Flüssigkeitsdruck in der normalen Wasserleitung nicht ausreicht, oder andere Flüssigkeiten, wie Molke oder Magermilch Verwendung finden sollen, von einem Zwischenbehälter 29 aus über eine Pumpe 30 beschickt werden kann.

Vor Beginn eines Fütterungsvorganges sind die Leitungen 7, 9 und 15, 16 leer. Es wird nun im Mischbehälter 1 eine für die nächste Fütterung ausreichende vorbestimmte Futtermenge zubereitet, wobei das Futter anschließend mittels der Förderpumpe 8, die Leitung 9, das geöffnete Ventil 10 in die Ringleitung 16 gefördert und nacheinander an Abgabestellen 17 ausgeteilt wird. Nach einer bestimmten Austeilungszeit können, wenn viele Abgabestellen 17 zu beschicken sind, bei gesperrt bleibenden Ventilen 18 die Ventile 10, 20 geöffnet werden, so daß das Futter aus dem Mischbehälter 1 durch Umpumpen homogenisiert wird.

Anschließend wird dosiert weiterverfüttert. Sobald der Mischbehälter 1 leer ist, wird das Ventil 20 geschlossen, und das Ventil 26 geöffnet und Futter aus dem Ende 16a der Ringleitung bis zum Ventil 18a wird durch Eindrücken von Wasser aus der Wasserleitung bzw. von Flüssigkeit aus dem Behälter 29 mittels der Pumpe 30 in den Mischbehälter 1 zurückgefördert. Nun wird dieses Futter mittels der Pumpe 8 neuerlich noch zu beteilenden Abgabestellen entlang der Leitung 16 zugeführt. Ist nun der Behälter 1 wieder entleert, dann wird eine wenigstens dem Füllvolumen der Leitungen 7, 9, 16 bis zum letzten Ventil 18a entsprechende Menge Wasser aus der Wasserleitung bzw. dem Behäter 29 über 30, 27, 28, 5 in den Mischbehälter 1 geleitet und mittels der Pumpe 8 in die Leitung 9 gedrückt. Dadurch werden die nächsten zu beteilenden Auslässe 17 mit Futter beschickt. Nach Abgabe des letzten Futters ist die Ringleitung 16 mit Wasser gefüllt. Es ist nun möglich, nach Öffnen des Ventiles 22 das Wasser aus der Ringleitung 16 in den Mischbehälter 1 zurückzudrücken, so daß sich die Leitung mit Luft füllt. Auch die Leitungsteile 7, 9 können entleert werden. Anschließend werden die Ventile 18, 18a einzeln geöffnet und sie selbst sowie die Ventile 19 durch Durchblasen gereinigt. Durch Einsprühen von Wasser über 24, 25 in die Druckluft kann eine zusätzliche Reinigung bewirkt werden. Die Anlage ist nun für den nächsten Fütterungsvorgang bereit, wobei die Leitungen 7, 9, 16 leer sind. Im Mischbehälter 1 können zusätzliche vom Kompressor 23 und der Leitung 24 aus beschickbare Reinigungsdüsen angebracht sein, und der Mischbehälter kann auch einen verschließbaren Ablauf für Reinigungsmittel und Spülflüssigkeit aufweisen.

Beim nächsten Fütterungsvorgang wird normalerweise die beim vorherigen Fütterungsvorgang in den Mischbehälter 1 zurückgedrückte Flüssigkeit zur Zubereitung des Futters verwendet.

Bei einer Anlage mit zwei oder mehreren nacheinander beschickbaren Ringleitungen würde die dargestellte Ringleitung 16 mit den Zusatzeinrichtungen, insbesondere dem Anschluß 26 für das Wasser, dem letzten zu beschickenden Ring entsprechen. Man kann nach dem Abzweig des Ventils 14 ein Zwei- oder Mehrwegventil 31 vorsehen, über das nacheinander der oder die vorgeordneten Ringe 32 mit Futter beschickt werden. Die Enden 32a der Ringe münden über eigene Absperrventile 33 im Mischbehälter 1. Bei einer derartigen Ausführung werden die zuerst beschickbaren Ringleitungen nach Abgabe des Futters an ihre Abgabestellen durch Druckluftzufuhr vom Kompressor 23 aus über die Ventile 33 in den Mischbehälter 1 entleert, so daß der jeweilige Futterrest erfaßt wird. Auch hier sind periodisch Homogenisierungen des Futters durch Umpumpen möglich. Bei der Futterausteilung im letzten Ring wird dann so vorgegangen, wie dies im vorhergehenden Beschreibungsteil ausführlich erläutert wurde.

## Patentansprüche

1. Verfahren zur dosierten Abgabe von Flüssigfutter an mehrere Abgabestellen (17), die entlang wenigstens einer von einer Förderpumpe (8) aus einem Mischbehälter (1) mit dem Flüssigfutter beschickbaren, als in den Mischbehälter (1) zurückführende Ringleitung (16) ausgebildeten Förderleitung angeordnet sind und einzeln freigebbare Auslässe (18) aufweisen, wobei nach der ersten Entleerung des Mischbehälters (1) in der bzw. den Förderleitungen (16a) enthaltenes Futter durch ein in die Förderleitung eingeleitetes, unter Druck gesetztes Transportmedium zum Mischbehälter (1) zurückgefördert, mittels der Förderpumpe (8) wieder in die Förderleitung zurückgedrückt und durch Nachdrücken mittels des in die Förderleitung eingeleiteten Transportmediums zu den noch zu beteilenden Auslässen (18) befördert wird, und wobei die Förderleitung (16) nach beendigten Fütterungsvorgang durch Einblasen von Druckluft entleert wird, dadurch gekennzeichnet, daß als Transportmedium eine Flüssigkeit, insbesondere Wasser verwendet wird, das für die Rückführung von Futter aus der Förderleitung (16) zum Mischbehälter (1) z. B. mittels einer Pumpe (30) in den zum Mischbehälter (1) zurückführenden Teil (16a) der Ringleitung (16) eindrückbar ist, nach Entleerung des Mischbehälters (1) von diesem Futter in einer den noch in der Förderleitung (16) befindlichen Futterrest entsprechenden Menge in den Mischbehälter (1) eingeführt wird und mittels der Förderpumpe (8) nach dem Futterrest in die Ringleitung ausgebracht wird, und daß die nach Verteilung des Futterrestes in der Leitung (16, 16a) befindliche Flüssigkeit durch Zufuhr der Druckluft in die Förderleitung in den Mischbehälter (1) zurückgedrückt und bei der Futtervorbereitung für die nächste Fütterung verwendet wird.

2. Verfahren nach Anspruch 1, dadurch gekennzeichnet, daß bei einer Fütterungsanlage mit zwei oder mehreren nacheinander beschickbaren Ringleitungen die zuerst beschickte Ringleitung bzw. beschickten Ringleitungen nach der Futterabgabe an ihren Abgabestellen durch Einblasen von Druckluft zurück in den Mischbehälter entleert und nur Futter in der letzten Ringleitung unter Verwendung von Flüssigkeit als Transportmedium in den Mischbehälter zurückgeführt und anschließend verteilt wird.

3. Verfahren nach Anspruch 1 oder 2, dadurch gekennzeichnet, daß mittels der Flüssigkeit nach der ersten Entleerung des Mischbehälters (1) nur eine Teilmenge des Futters aus der Förderleitung (16, 16a), zumindest das in dem zum Mischbehälter (1) zurückführenden Ende (16a) nach dem letzten Auslaß (18a) der Ringleitung (16) befindliche Futter, in den Mischbehälter zurückgedrückt wird.

4. Verfahren nach einem der Ansprüche 1 bis 3, dadurch gekennzeichnet, daß als Flüssigkeit wenigstens zum Teil Molke oder Magermilch verwendet wird.

## Claims

1. A method of metered delivery of liquid fodder to a number of delivery stations (17) disposed along at least one delivery line in the form of a closed loop (16) supplied with liquid fodder by a pump (8) from a mixing container (1) and leading back to the mixing container (1), the stations having outlets (18) which can be opened individually, wherein after the mixing container (1) has first been emptied the fodder in the delivery line or lines (16a) is returned to the mixing container (1) by a pressurised transport medium introduced into the delivery line, is forced back to the delivery line by the pump (8), and is conveyed to the not yet supplied outlets (18) by additional pressure by the transport medium introduced into the delivery line, and wherein at the end of the feeding process the delivery line (16) is emptied by injection of compressed air, characterised in that the transport medium is a liquid, particularly water, which can be forced by a pump (30) for example into the part (16a) of the closed loop (16) leading back to the mixing container (1), in order to return fodder from the delivery line (16) to the mixing container (1), after the mixing container (1) has been emptied the fodder therein is introduced into the mixing container (1) in a quantity corresponding to the amount of fodder remaining in the delivery line (16) and is conveyed by the pump (8) into the closed loop after the remaining fodder, and after the remaining fodder has been distributed the liquid in the line (16, 16a) is returned by compressed air through the delivery line to the mixing container (1) and is used for preparing the fodder for the next feeding operation.

2. A method according to claim 1, characterised in that in the case of a feeding plant comprising two or more successively supplied closed loops the first supplied loop or loops, after delivery of fodder to their delivery stations, is emptied back into the mixing container by injection of compressed air, and only fodder in the last closed loop is returned to the mixing container and subsequently distributed, liquid being used as a transport medium.

3. A method according to claim 1 or 2, characterised in that after the first emptying of the mixing container (1), only a part of the fodder from the delivery line (16, 16a), at least the fodder in the end (16a) leading back to the mixing container (1) after the last outlet (18a) of the closed loop (16), is forced back by the liquid into the mixing container.

4. A method according to any of claims 1 to 3, characterised in that the liquid used is at least partly whey or skimmed milk.

## Revendications

1. Procédé pour distribuer des quantités dosées de nourriture liquide pour animaux à plusieurs postes de distribution (17), ceux-ci étant disposés le long d'au moins une conduite d'alimentation qui peut être alimentée en nourriture liquide pour animaux par une pompe de déplacement (8) à partir d'un réservoir mélangeur (1) et qui est réalisée sous la forme d'une conduite en boucle (16) retournant au réservoir mélangeur (1), en présentant des sorties (18) qui peuvent être libérées individuellement, cependant qu'après que le réservoir mélangeur (1) a été vidé pour la première fois, de la nourriture pour animaux contenue dans la ou les conduites d'alimentation (16a), respectivement, est ramenée au réservoir mélangeur (1) par un agent de transport qui est introduit dans la conduite d'alimentation et qui est mis sous pression, qu'elle est refoulée à nouveau dans la conduite d'alimentation au moyen de la pompe de déplacement (8) et que, par un maintien sous pression au moyen de l'agent de transport introduit dans la conduite d'alimentation, elle est amenée aux sorties (18) qui doivent être encore alimentées, et cependant que la conduite d'alimentation (16) est vidée par soufflage d'air comprimé après que l'opération de distribution de nourriture pour animaux est terminée, caractérisé par le fait que l'on utilise comme agent de transport un liquide, et en particulier de l'eau, qui peut être injecté, par exemple au moyen d'une pompe (30), dans la partie (16a) de la conduite en boucle (16) ramenant au réservoir mélangeur (1), afin de ramener de la nourriture pour animaux de la conduite d'alimentation (16) au réservoir mélangeur (1), qu'après que le réservoir mélangeur (1) a été vidé de cette nourriture pour animaux, on introduit celle-ci dans le réservoir mélangeur (1) en une quantité correspondant au reste de nourriture pour animaux qui se trouve encore dans la conduite d'alimentation (16), et qu'on la fait sortir dans la conduite en boucle après le reste de nourriture pour animaux au moyen de la pompe de déplacement (8), et par le fait que le liquide qui se trouve dans la conduite (16, 16a) après la répartition du reste de nourriture pour animaux est refoulé dans le réservoir mélangeur (1) par amenée de l'air comprimé dans la conduite d'alimentation, et qu'il est utilisé lors de la préparation de la nourriture pour animaux pour la distribution suivante de nourriture pour animaux.

2. Procédé selon la revendication 1, caractérisé par le fait que, dans le cas d'une installation de distribution de nourriture pour animaux comprenant deux ou plusieurs conduites en boucle qui peuvent être alimentées successivement, la conduite en bouche qui est alimentée en premier ou, respectivement, les conduites en bouche qui sont alimentées en premier sont vidées dans le réservoir mélangeur par soufflage d'air comprimé après la distribution de nourriture pour animaux à leurs postes de distribution, cependant que seule de la nourriture pour animaux contenue dans la dernière conduite en bouche est ramenée dans le réservoir mélangeur en utilisant du liquide comme agent de transport, pour être ensuite répartie.

3. Procédé selon la revendication 1 ou 2, caractérisé par le fait qu'après que le réservoir mélangeur (1) a été vidé pour la première fois, c'est seulement une quantité partielle de nourriture pour animaux, et du moins la nourriture pour animaux située dans l'extrémité (16a) ramenant au réservoir mélangeur (1) après la dernière sortie (18a) de la conduite en bouche (16), qui est refoulée dans le réservoir mélangeur au moyen du liquide depuis la conduite d'alimentation (16, 16a).

4. Procédé selon l'une des revendications 1 à 3, caractérisé par le fait que l'on utilise comme liquide, du moins partiellement, du petit-lait ou du lait écrémé.
